**Europäisches Patentamt**

**European Patent Office**

**Office européen des brevets**

(11) Veröffentlichungsnummer: **0 080 024**
**A1**

# EUROPÄISCHE PATENTANMELDUNG

(21) Anmeldenummer: **82107278.2**

(22) Anmeldetag: **11.08.82**

(51) Int. Cl.³: **B 62 J 5/00**

---

(30) Priorität: **19.11.81 DE 3145775**

(43) Veröffentlichungstag der Anmeldung: **01.06.83**
**Patentblatt 83/22**

(84) Benannte Vertragsstaaten: **AT BE CH DE FR GB IT LI NL SE**

(71) Anmelder: **Reum-Mühling, Petra, Abteikellerstrasse 9, D-6967 Buchen (DE)**

(72) Erfinder: **Reum-Mühling, Petra, Abteikellerstrasse 9, D-6967 Buchen (DE)**

(74) Vertreter: **Hach, Hans Karl, Dr., Tarunstrasse 23, D-6950 Mosbach-Waldstadt (DE)**

---

(54) **Notstromversorgung für eine Fahrradbeleuchtung.**

(57) Der Stromspeicher (12) und das Schaltaggregat (13) eines Notstromaggregates für eine dynamobetriebene Stromversorgung einer Fahrradbeleuchtung ist im Sattel-stützrohr (1) untergebracht.

0080024
15.7.82

## NOTSTROMVERSORGUNG FÜR EINE FAHRRADBELEUCHTUNG

Die Erfindung betrifft ein Notstromaggregat für eine dynamobetriebene Stromversorgung einer Fahrradbeleuchtung mit einem in
einem rohrförmigen Hohlraum des Fahrrades untergebrachten, wiederaufladbaren Stromspeicher, für den eine Anschlußleitung aus
dem Sattelrohr herausgeführt und mit einem Schaltaggregat zum
Umschalten von Dynamobetrieb auf Notstrombetrieb.

Bei einem aus der DE-PS 812 229 vorbekannten Aggregat besteht
der Stromspeicher aus drei zylindrischen Akkumulatorzellen,
die koaxial hintereinander in demjenigen Rohr des Fahrradrahmens stecken, in dessen oberem Ende das Sattelstützrohr steckt.
Der Minus-Anschluß erfolgt über Massenpotential, während die
Plus-Leitung aus der oberen Öffnung des Sattelstützrohrs
herausgeführt ist und gemeinsam mit der Plus-Leitung des Dynamos an einem am Fahrradlampengehäuse angeordneten, handbetätigbaren Umschalter liegt.

Das Schaltaggregat hat zweckmäßig selbsttätige Schaltfunktionen, mit denen bei eingeschalteter Beleuchtung und ausfallendem Dynamostrom selbsttätig auf Notstromversorgung umgeschaltet wird und die Notstromversorgung nach einem vorbestimmten Zeitintervall abgebrochen wird, um den Stromspeicher
zu schonen. Diese und mögliche weitere Schaltfunktionen erfordern ein elektronikbestücktes Schaltaggregat zusätzlich
zum handbetätigbaren Ein- und Ausschalter.

Da das Notstromaggregat eine zusätzliche Einrichtung für die
Fahrradbeleuchtung ist, ist es Aufgabe der Erfindung, diese
auch baulich zu einer Einheit zusammenzufassen und an einer
bequem zugänglichen Stelle unterzubringen, an der sie auch

BAD ORIGINAL

leicht nachrüstbar ist.

Die Erfindung ist dadurch gekennzeichnet, daß der Stromspeicher und das Schaltaggregat im Sattelstützrohr untergebracht ist.

Die Unterbringung im Sattelstützrohr erleichtert den elektrischen Anschluß, weil dieser nur aus dem Sattelstützrohr herausgeführt werden muß, und auch die Ausrüstung, Nachrüstung und Umrüstung, weil Sattelstützrohre bei den gängigen Fahrrädern sowohl vom Rahmen als auch vom Sattel durch Lösen von vorgesehenen Spannschrauben leicht gelöst werden können. Das Sattelstützrohr ist dadurch bequem als Einzelteil zugänglich und kann bequem mit dem Notstromaggregat ausgerüstet oder nachgerüstet werden. Es ist auch leicht möglich, das Notstromaggregat mit dem Sattelstützrohr zu einer Baueinheit zu vereinigen, die zur Nachrüstung an fertige Fahrräder bereitgestellt werden kann. Es genügt dann, das leere Sattelstützrohr gegen ein mit dem Notstromaggregat ausgestattetes Sattelstützrohr auszutauschen und das Notstromaggregat über die vorgesehene Anschlußleitung anzuschließen. Dabei ist vorteilhaft, daß die Anschlußkontakte und Anschlußleitungen des Notstromaggregates untereinander und zum Massenkontakt an das Sattelstützrohr in dieser Baueinheit, bestehend aus Sattelstützrohr, Schaltaggregat und Stromspeicher, fertig verlegt sein können und nur noch eine einzige Anschlußleitung angeschlossen werden muß, wenn ein Fahrrad mit einer solchen Notstromversorgung ausgerüstet werden soll.

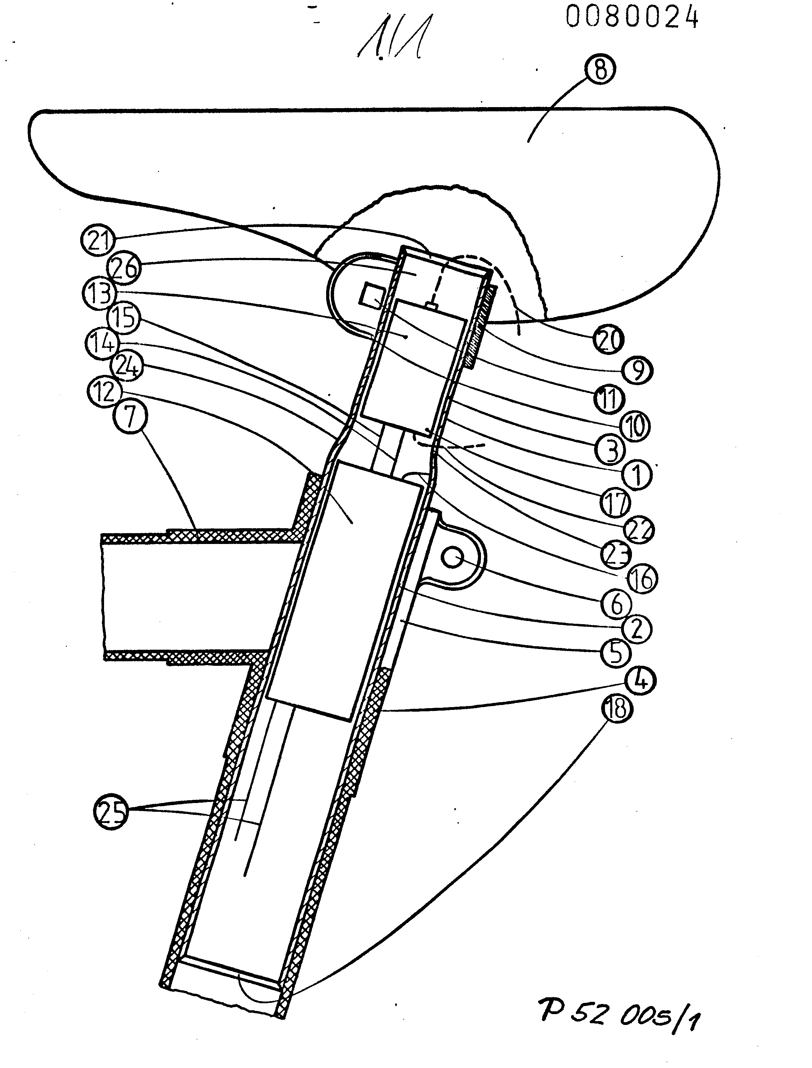

Die Erfindung wird nun anhand der beigefügten Zeichnung näher erläutert.

BAD ORIGINAL

0080024
P 52 005
15.7.82.

Die Zeichnung zeigt im Teilschnitt ein Sattelstützrohr, ausgerüstet mit einem Notstromaggregat, mit Teilen des Fahrrades
im Teilschnitt.

Mit 1 ist das Sattelstützrohr bezeichnet, dessen unterer Teil
2 im Durchmesser größer ist als der obere Teil 3. Der untere
Teil 2 steckt passend in einem Rahmenrohr 4, das an seinem
oberen Ende einen Schlitz 5 und eine Verschraubung 6 zum Einspannen des eingesteckten Sattelstützrohrs 1 aufweist. An das
Rahmenrohr 4 schließt das zum Fahrradrahmen gehörige Rahmenquerrohr 7 an. Das obere Teil 3 steckt passend in einem unten am Sattel 8 befestigten Rohrstück 9. Das Rohrstück 9 ist
oben offen und weist unten einen dem Schlitz 5 entsprechenden Schlitz 10 auf mit einer zugehörigen Verschraubung 11,
mit Hilfe derer das Rohrstück 9 um das eingesteckte Teil 3
fest verspannt werden kann.

Innerhalb des Sattelstützrohrs 1 ist als wiederaufladbarer
Stromspeicher eine zylinderförmige Akkumulatorzelle 12 untergebracht. Statt dessen können auch mehrere in Reihe hintereinander angeordnete Akkumulatorzellen vorgesehen sein. Die Akkumulatorzelle 12 ist in dem weiteren, unteren Teil 2 angeordnet. In dem engeren, oberen Teil 3 ist das Schaltaggregat 13
untergebracht. Die Akkumulatorzelle 12 und das Schaltaggregat
13 sind innerhalb des Sattelstützrohrs 1 miteinander verschaltet, die entsprechenden Verbindungskabel sind mit 14 und 15
bezeichnet. Mit 16 ist eine gemeinsame an die Innenwand des
metallisch leitend ausgestalteten Sattelstützrohrs 1 kontaktierte Massenanschlußleitung bezeichnet. Da der Fahrradrahmen
metallisch leitend ist und metallisch leitend mit dem Sattelstützrohr 1 verbunden ist, steht er unter Massenpotential.

Mit 25 ist eine gegebenenfalls mehradrige Anschlußleitung für
das aus Akkumulatorzelle 12 und Schaltaggregat 13 bestehende
Notstromaggregat 17 bezeichnet, die aus der unteren Öffnung
18 des Sattelstützrohrs 1 herausgeführt und innerhalb des
Rahmenquerrohrs 7 verlegt ist. Die Anschlußleitung 25 führt
an die nicht dargestellte, dynamobetriebene Fahrradbeleuchtung und ist dort angeschlossen.

BAD ORIGINAL

Q080024
P 52 005

Statt diese. für Akkumulatorzelle 12 und Schaltaggregat 13
gemeinsame. Anschlußleitung 25 unten aus dem Sattelstützrohr 1
herauszuführen, kann man sie auch, wie durch die strichpunktierte Linie 20 angedeutet, aus der oberen Öffnung 21 des
Sattelstützrohrs 1 und durch das Rohrstück 9 hindurch herausführen, um sie dann gegebenenfalls außen am Fahrradrahmen zum
Anschluß an die dynamobetriebene Fahrradbeleuchtung zu verlegen.

Man kann auch die gemeinsame Anschlußleitung . wie durch die
strichpunktierte Linie 22 angedeutet, aus einem zu diesem Zweck
vorzusehenden Durchbruch 23 in der Wandung des Sattelstützrohrs
1 herausführen. Dieser Durchbruch 23 wird zweckmäßig in einem
Bereich des Sattelstützrohrs 1 angelegt, der nicht in das Rahmenrohr 4 hineinragt und auch nicht in das Rohrstück 9. Der
günstigste Platz ist der Übergangsbereich 24 vom kleineren
Durchmesser des Teils 3 zum großen Durchmesser des Teils 2,
dann nämlich ist die Durchführung weder für das Rohrstück
noch für das Rahmenrohr 4 im Wege.

Die Ausgestaltung mit der Anschlußleitung 25 empfiehlt sich,
wenn das Notstromaggregat als Erstausrüstung eingesetzt wird,
die Ausgestaltung mit der Anschlußleitung 20 oder 22 empfiehlt sich bei Nachrüstung eines bereits vorhandenen Fahrrades.

Die Teile des Notstromaggregates 17, also die Akkumulatorzelle
12 und das Schaltaggregat 13, sind innerhalb des Sattelstützrohrs 1 befestigt und, abgesehen von der erwähnten Kontaktierung, gegenüber dem Sattelstützrohr und nach außen elektrisch
isoliert. Das geschieht am besten und einfachsten durch eingießen in Vergußmasse, die in der Zeichnung mit 26 bezeichnet
ist und das Sattelstützrohr 1 so weit ausfüllt, daß die Akkumulatorzelle 12 und das Schaltaggregat 13 vollständig innerhalb der Vergußmasse liegen.

BAD ORIGINAL

0080024
P 52 005
15.7.82.

Patentansprüche:

1. Notstromaggregat für eine dynamobetriebene Stromversorgung einer Fahrradbeleuchtung mit einem in einem rohrförmigen Hohlraum des Fahrrades untergebrachten, wiederaufladbaren Stromspeicher, für den eine Anschlußleitung aus dem Sattelrohr herausführt, und mit einem Schaltaggregat zum Umschalten von Dynamobetrieb auf Notstrombetrieb, dadurch gekennzeichnet, daß der Stromspeicher ( 12 ) und das Schaltaggregat ( 13 ) im Sattelstützrohr ( 1 ) untergebracht ist.

2. Aggregat nach Anspruch 1, dadurch gekennzeichnet, daß für ein Sattelstützrohr ( 1 ), dessen oberer Teil ( 3 ) kleineren Durchmesser hat als der untere, in den Fahrradrahmen ( 4 ) passende Teil ( 2 ), das Schaltaggregat ( 13 ) im oberen Teil und der Stromspeicher ( 12 ) im unteren Teil untergebracht ist.

3. Aggregat nach Anspruch 1 oder 2, dadurch gekennzeichnet, daß das Schaltaggregat ( 13 ) und der Stromspeicher ( 12 ) innerhalb des Sattelstützrohrs ( 1 ) miteinander verschaltet und befestigt sind und mit dem auswechselbar einbaubaren Sattelstützrohr ( 1 ) eine auswechselbare und nachrüstbare Baueinheit bilden.

4. Aggregat nach einem der vorhergehenden Ansprüche, dadurch gekennzeichnet, daß das Schaltaggregat ( 13 ) und der Stromspeicher ( 12 ) als Massenanschluß an der Innenseite des leitenden Sattelstützrohrs ( 1 ) kontaktiert sind.

5. Aggregat nach Anspruch 4, dadurch gekennzeichnet, daß eine für das Schaltaggregat und den Stromspeicher gemeinsame Anschlzßleitung ( 20, 22 ) vorgesehen ist, die am oberen Teil ( 3 ) des Sattelstützrohrs ( 1 ) aus diesem herausgeführt ist.

BAD ORIGINAL

0080024

P 52 005

6. Aggregat nach Anspruch 5, dadurch gekennzeichnet, daß die Anschlußleitung ( 20 ) aus der Öffnung ( 21 )) am oberen Ende des Sattelstützrohrs ( 1 ) herausgeführt ist.

7. Aggregat nach Anspruch 4, dadurch gekennzeichnet, daß die Anschlußleitung ( 25 ) aus der Öffnung ( 18 ) am unteren Ende des Sattelstützrohres ( 1 ) herausgeführt ist und im Inneren des Fahrradrahmens ( 7 ) weiter verlegt ist.

8. Aggregat nach Anspruch 4, dadurch gekennzeichnet, daß für die Anschlußleitung ( 22 ) im Übergangsbereich ( 24 ) der Wandung des oberen Teils ( 3 ) des Sattelstützrohrs ( 1 ) zum unteren Teil ( 2 ) ein Durchbruch ( 23 ) vorgesehen ist, durch den diese Anschlußleitung ( 22 ) herausgeführt ist.

BAD ORIGINAL

0080024

P 52 005/1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-2 409 906  (M.P. GONZALES)<br><br>* Seite 3, Zeile 34 - Seite 4, Zeile 36; Figuren 1,2 * | 1,3-5, 8 | B 62 J  5/00 |
| D,A | DE-C- 812 229  (VOGT & CO.)<br>* Seite 2, Zeilen 43-87; Figuren 1-3 * | 1,4-6 | |
| A | DE-A-2 427 740  (J. MILLER et al.)<br>* Seite 1, Zeile 1 - Seite 2, Zeile 18; Seite 3, Zeilen 7-30; Figuren 1,2 * | 1,3 | |

RECHERCHIERTE SACHGEBIETE (Int. Cl. 3)

B 62 J  5/00

Der vorliegende Recherchenbericht wurde für alle Patentansprüche erstellt.

| Recherchenort<br>DEN HAAG | Abschlußdatum der Recherche<br>18-02-1983 | Prüfer<br>POINT A.G.F. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82